# EUROPÄISCHE PATENTANMELDUNG

(11) **EP 1 939 966 A1**
(43) Veröffentlichungstag der Anmeldung: **02.07.2008**
(21) Anmeldenummer: 07033538.5
(22) Anmeldetag: 30.10.2007
(51) Int. Cl.: H01M 8/04, H01M 8/00

(54) **Verfahren zum Steuern eines einer Klimaanlage zugeordneten Brennstoffzellensystems und Klimaanlage zur Standklimatisierung eines Kraftfahrzeugs**

(30) Priorität: 29.11.2006 DE 102006056358
(71) Anmelder: Enerday GmbH, 82131 Stockdorf (DE)
(72) Erfinder: Pfalzgraf, Manfred, 82211 Herrsching am Ammersee (DE); Bedenbecker, Markus, 82131 Gauting (DE); Boltze, Matthias, 17039 Wulkenzin (OT Neuendorf) (DE); Engl, Andreas, 80689 München (DE)
(74) Vertreter: Schumacher & Willsau

(57) **Zusammenfassung**

Die Erfindung betrifft ein Verfahren zum Steuern eines Brennstoffzellensystems (14), welches einer Klimaanlage (12) zur Standklimatisierung eines von einem Antriebsaggregat (94) antreibbaren Kraftfahrzeugs (10) zum Betreiben eines Kältekreises (16) zugeordnet ist.

Erfindungsgemäß ist vorgesehen, dass eine Brennstoffzuführung des Brennstoffzellensystems (14) mittels eines Steuersignals automatisch abgeschaltet wird, welches anzeigt, dass die Menge und/oder die Beschaffenheit des zur Verfügung stehenden Brennstoffs vorgegebene Anforderungen nicht erfüllt.

Die Erfindung betrifft weiterhin eine Klimaanlage.

## Beschreibung

Die Erfindung betrifft ein Verfahren zum Steuern eines Brennstoffzellensystems, welches einer Klimaanlage zur Standklimatisierung eines von einem Antriebsaggregat antreibbaren Kraftfahrzeugs zum Betreiben eines Kältekreises zugeordnet ist.

Die Erfindung betrifft weiterhin eine Klimaanlage zur Standklimatisierung eines von einem Antriebsaggregat antreibbaren Kraftfahrzeugs mit einem Brennstoffzellensystem zum Betreiben eines Kältekreises.

Aus der DE 102 23 949 A1 ist eine Klimaanlage mit einer Brennstoffzelle zur Standklimatisierung eines Fahrzeugs bekannt.

Das in der Brennstoffzelle umzusetzende Reformat wird in einem Reformer aus Brennstoff und Oxidationsmittel erzeugt. Als Brennstoff dient vorzugsweise der Kraftstoff, mit dem auch das Antriebsaggregat des Kraftfahrzeugs betrieben wird. In diesem Zusammenhang ist zu beachten, dass die Beschaffenheit des Kraftstoffs variabel sein kann, insbesondere durch Falschbetankung oder durch die Verwendung verunreinigter Kraftstoffe. Dies kann zu einer Fehlfunktion des Brennstoffzellensystems führen, beispielsweise durch eine Fehlfunktion des Reformers und/oder eine Vergiftung des Brennstoffzellenstapels. Des Weiteren ist zu berücksichtigen, dass sich aufgrund der Verwendung gleicher Brennstoffe sowohl für den Antrieb des Kraftfahrzeugs als auch für das Brennstoffzellensystem diese Teilsysteme gegenseitig beeinflussen.

Der Erfindung liegt die Aufgabe zugrunde, die Nachteile des Standes der Technik zumindest teilweise zu überwinden, wobei insbesondere eine Schädigung des Brennstoffzellensystems beziehungsweise eine Beeinträchtigung des Betriebs des Antriebsaggregats durch das Brennstoffzellensystem vermieden werden sollen.

Diese Aufgabe wird mit den Merkmalen der unabhängigen Ansprüche gelöst.

Vorteilhafte Ausführungsformen der Erfindung sind in den abhängigen Ansprüchen angegeben.

Die Erfindung baut auf dem gattungsgemäßen Verfahren dadurch auf, dass eine Brennstoffzuführung des Brennstoffzellensystems mittels eines Steuersignals automatisch abgeschaltet wird, welches anzeigt, dass die Menge und/oder die Beschaffenheit des zur Verfügung stehenden Brennstoffs vorgegebene Anforderungen nicht erfüllt. Auf diese Weise wird sichergestellt, dass die Menge des im Tank des Kraftfahrzeugs zur Verfügung stehenden Kraftstoffs durch den Betrieb des Brennstoffzellensystems in keinem Fall unter ein Mindestniveau gebracht wird und eine Inbetriebnahme des Verbrennungsmotors somit in jedem Fall möglich ist. Weiterhin wird eine Funktionsbeeinträchtigung des Brennstoffzellensystems vermieden, die ansonsten durch die Verwendung von Brennstoff falscher Beschaffenheit auftreten könnte.

Beispielsweise kann vorgesehen sein, dass die vorgegebenen Anforderungen an die Beschaffenheit Anforderungen an die Qualität des als Brennstoff eingesetzten Kraftstoffs umfassen. Damit kann insbesondere auf die Verwendung von Kraftstoffen reagiert werden, die eine falsche Oktanzahl aufweisen. Ist das Brennstoffzellensystem beispielsweise auf die Verwendung von Kraftstoffen mit hoher Oktanzahl optimiert, so kann eine Abschaltung erfolgen, wenn absichtlich oder unabsichtlich Kraftstoff mit einer niedrigeren Oktanzahl getankt wurde.

Ebenfalls kann vorgesehen sein, dass die vorgegebenen Anforderungen an die Beschaffenheit Anforderungen an die Art des als Brennstoff eingesetzten Kraftstoffs umfassen. Ein auf Dieselkraftstoff optimiertes Brennstoffzellensystem kann somit abgeschaltet werden, wenn stattdessen Benzin getankt wird, und umgekehrt. Dies spielt auch dann eine Rolle, wenn der Verbrennungsmotor mit verschiedenen Kraftstoffen betrieben werden kann und somit eine Betankung mit verschiedenen Kraftstoffarten planmäßig erfolgt.

Von besonderer Bedeutung ist, dass die vorgegebenen Anforderungen an die Beschaffenheit Anforderungen an die Schwefelkonzentration in dem als Brennstoff eingesetzten Kraftstoff umfassen. Die Qualität von Dieselkraftstoffen ist in verschiedenen Ländern stark unterschiedlich. Besonders bei hohen Schwefelkonzentrationen kann auf der Grundlage der vorliegenden Erfindung sichergestellt werden, dass keine Beschädigung des Brennstoffzellensystems erfolgt.

Von besonderem Vorteil ist, dass bei Wiederinbetriebnahme der Brennstoffzuführung nach einer automatischen Abschaltung in einer Brennstoffleitung vorhandener Restbrennstoff direkt einem Nachbrenner des Brennstoffzellensystems zugeführt wird. Dies kann beispielsweise so erfolgen, dass die Brennstoffleitungen Abzweigungen aufweisen, die zu einer mit dem Nachbrenner verbundenen Brennstoffleitung führen. Die Abzweigleitungen können über Ventile mit den jeweiligen Brennstoffzuführleitungen verbunden sein. Im Falle der Wiederinbetriebnahme werden die Ventile entsprechend geschaltet, und der Restbrennstoff wird komplett direkt dem Nachbrenner zugeführt, so dass keinerlei Beeinträchtigung des dem Nachbrenner vorgelagerten Teils des Brennstoffzellensystems zu befürchten ist. Eine solche Wiederinbetriebnahme kann gezielt nur dann erfolgen, wenn vorher eine automatische Abschaltung stattgefunden hat. Ebenfalls ist es denkbar, dass das System immer auf die gleiche Weise in Betrieb genommen wird; es findet also in jedem Fall eine Entleerung der Brennstoffleitungen statt.

Besonders nützlich ist es, dass die Brennstoffzuführung wieder in Betrieb genommen wird, wenn der Kraftstoffpegel um einen vorbestimmten Betrag angestiegen ist. Dann kann sichergestellt sein, dass der Tankinhalt wieder zum Betrieb des Brennstoffzellensystems ausreicht, ohne die nachfolgende Inbetriebnahme des Verbrennungsmotors zu gefährden. Ebenfalls ist es wahrscheinlich, dass nach der Betankung mit falschem oder verunreinigtem Kraftstoff nun eine hinreichende Verdünnung stattgefunden hat, um das Brennstoffzellensystem ohne die Gefahr einer Beschädigung oder Verunreinigung betreiben zu können. Sollte nach wie vor eine Verunreinigung oder eine beispielsweise zu geringe Oktanzahl vorliegen, kann das System wiederum erfindungsgemäß abgeschaltet werden.

Von besonderem Vorteil ist, dass die Brennstoffzuführung wieder in Betrieb genommen wird, wenn der Kraftstoffpegel um einen vorbestimmten relativen Betrag angestiegen ist. Insbesondere lässt sich auf diese Weise eine hinreichende Verdünnung von zuvor vorliegendem falschem oder verunreinigtem Kraftstoff realisieren.

Es kann vorgesehen sein, dass die Beschaffenheit des zur Verfügung stehenden Brennstoffs durch eine Sensoreinrichtung erfasst wird, die der Klimaanlage und/oder dem Brennstoffzellensystem zugeordnet ist. Die Klimaanlage beziehungsweise das Brennstoffzellensystem lassen sich somit in jedem Fall in erfindungsgemäßer Weise steuern, das heißt ohne bestimmte Anforderungen an das mit dem System zu bestückende Kraftfahrzeug zu stellen.

Es kann aber auch nützlich sein, dass die Beschaffenheit des zur Verfügung stehenden Brennstoffs durch eine Sensoreinrichtung erfasst wird, mit der das Kraftfahrzeug unabhängig von der Anwesenheit einer Klimaanlage bestückt ist. In diesem Fall werden vorhandene Ressourcen in vorteilhafterweise ausgenutzt, beispielsweise durch Kommunikation mit einem Bordrechner, die insbesondere über einen Datenbus mit der Steuerung der Klimaanlage beziehungsweise des Brennstoffzellensystems erfolgen kann.

Die Erfindung baut auf der gattungsgemäßen Klimaanlage dadurch auf, dass eine Brennstoffzuführung des Brennstoffzellensystems mittels eines Steuersignals automatisch abschaltbar ist, welches anzeigt, dass die Menge und/oder die Beschaffenheit des zur Verfügung stehenden Brennstoffs vorgegebene Anforderungen nicht erfüllt. Hierdurch werden die Vorteile und Besonderheiten des erfindungsgemäßen Verfahrens auch im Rahmen einer Vorrichtung realisiert. Dies gilt auch für die nachfolgend angegebenen besonders vorteilhaften Ausführungsformen der erfindungsgemäßen Klimaanlage.

Diese ist in nützlicher Weise dadurch weitergebildet, dass die vorgegebenen Anforderungen an die Beschaffenheit Anforderungen an die Qualität des als Brennstoff eingesetzten Kraftstoffs umfassen.

Weiterhin kann vorgesehen sein, dass die vorgegebenen Anforderungen an die Beschaffenheit Anforderungen an die Art des als Brennstoff eingesetzten Kraftstoffs umfassen.

Es ist auch bevorzugt, dass die vorgegebenen Anforderungen an die Beschaffenheit Anforderungen an die Schwefelkonzentration in dem als Brennstoff eingesetzten Kraftstoff umfassen.

Die erfindungsgemäße Klimaanlage ist in besonders vorteilhafterweise dadurch weitergebildet, dass bei Wiederinbetriebnahme der Brennstoffzuführung nach einer automatischen Abschaltung in einer Brennstoffleitung vorhandener Restbrennstoff direkt einem Nachbrenner des Brennstoffzellensystems zuführbar ist.

Weiterhin kann es nützlich sein, dass die Brennstoffzuführung wieder in Betrieb nehmbar ist, wenn der Kraftstoffpegel um einen vorbestimmten Betrag angestiegen ist.

In diesem Zusammenhang ist auch von Vorteil, dass die Brennstoffzuführung wieder in Betrieb nehmbar ist, wenn der Kraftstoffpegel um einen vorbestimmten relativen Betrag angestiegen ist.

Weiterhin ist es nützlich, dass die Beschaffenheit des zur Verfügung stehenden Brennstoffs durch eine Sensoreinrichtung erfassbar ist, die der Klimaanlage und/oder dem Brennstoffzellensystem zugeordnet ist.

Es kann auch von Vorteil sein, dass die Beschaffenheit des zur Verfügung stehenden Brennstoffs durch eine Sensoreinrichtung erfassbar ist, mit der das Kraftfahrzeug unabhängig von der Anwesenheit einer Klimaanlage bestückt ist

Eine bevorzugte Ausführungsform der Erfindung wird nachfolgend mit Bezug auf die begleitenden Zeichnungen beispielhaft erläutert.

### Es zeigen:

- Figur 1: eine schematische Darstellung einer erfindungsgemäßen Klimaanlage;
- Figur 2: eine schematische Darstellung des Kraftfahrzeugs mit der erfindungsgemäßen Klimaanlage;
- Figur 3: ein Flussdiagramm eines Klimatisierungsbetriebs und
- Figur 4: ein Flussdiagramm zur Erläuterung eines erfindungsgemäßen Verfahrens.

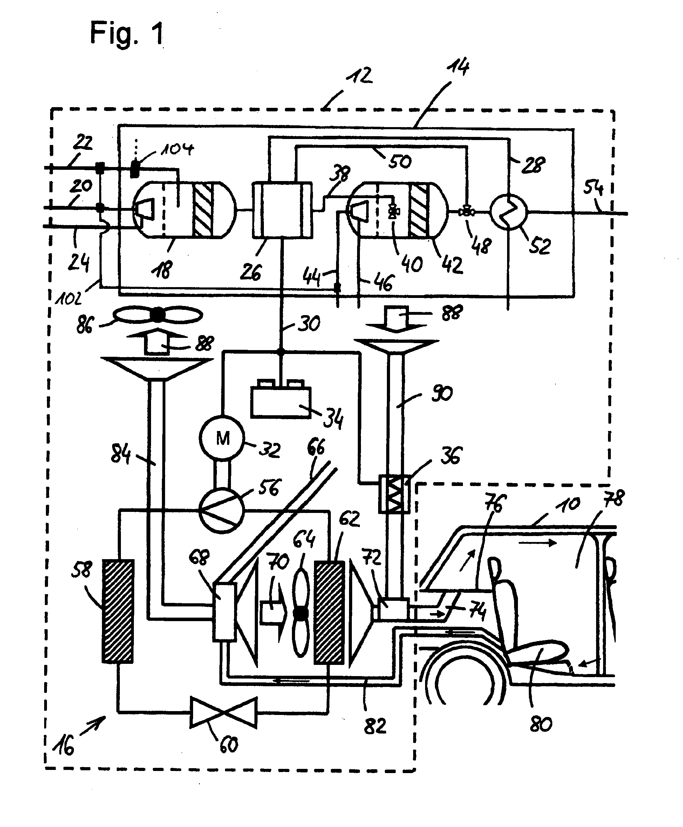

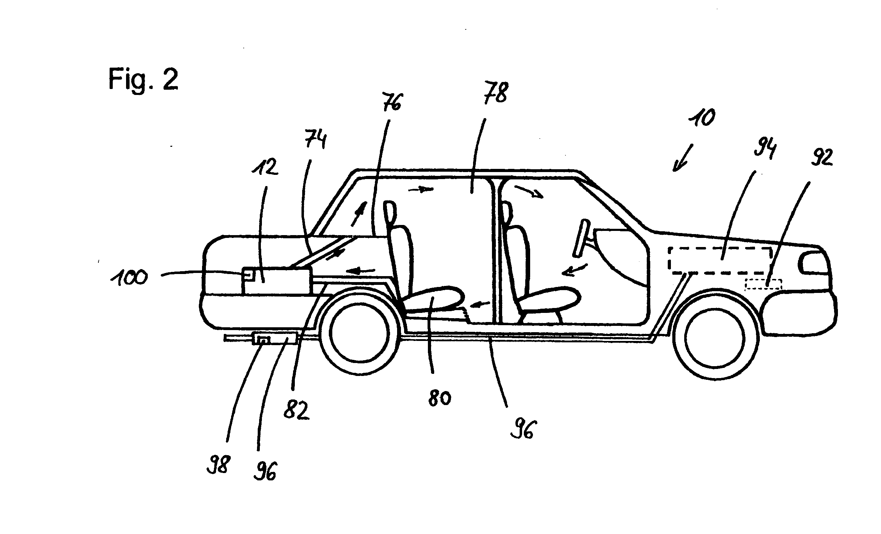

Figur 1 zeigt eine schematische Darstellung einer erfindungsgemäßen Klimaanlage. Die in einem Kraftfahrzeug 10 installierte Klimaanlage 12 (Einbaulage siehe Fig. 2), die in Figur 1 mit einer gestrichelten Linie umrissen ist, umfasst als Hauptelemente ein Brennstoffzellensystem 14 und einen Kältekreis 16.

Das Brennstoffzellensystem 14 umfasst einen Reformer 18, dem über einen Brennstoffstrang 20 aus einem nicht dargestellten Brennstofftank Brennstoff zuführbar ist. Ferner ist dem Reformer 18 an einer zweiten Brennstoffzuführstufe mittels eines Brennstoffstrangs 22 ebenfalls aus dem Brennstofftank Brennstoff zuführbar. Als Brennstoffsorten kommen Diesel, Benzin, Erdgas und weitere aus dem Stand der Technik bekannte Brennstoffsorten in Frage. Weiterhin ist dem Reformer 18 über einen Oxidationsmittelstrang 24 Oxidationsmittel, d.h. insbesondere Luft, zuführbar. Das von dem Reformer 18 erzeugte Reformat ist einem Brennstoffzellenstapel 26 zuführbar. Alternativ kann anstatt des Brennstoffzellenstapels 26 auch nur eine Brennstoffzelle vorgesehen sein. Bei dem Reformat handelt es sich um ein wasserstoffhaltiges Gas, das in dem Brennstoffzellenstapel 26 mit Hilfe von über einen Kathodenzuluftstrang 28 geförderter Kathodenzuluft unter Erzeugung von elektrischer Energie und Wärme umgesetzt wird. Die erzeugte elektrische Energie ist über eine elektrische Leitung 30 einem Elektromotor 32, einer Batterie 34 und einer elektrischen Heizeinrichtung 36 der Klimaanlage 12 zuführbar. Im dargestellten Fall ist das Anodenabgas über einen Anodenabgasstrang 38 einer Mischeinheit 40 eines Nachbrenners 42 zuführbar. Ferner ist dem Nachbrenner 42 über einen Brennstoffstrang 44 Brennstoff aus dem Brennstofftank und über einen Oxidationsmittelstrang 46 Oxidationsmittel zuführbar. In den Brennstoffsträngen 20, 22 und 44 sind geeignete, nicht dargestellte Fördereinrichtungen, wie beispielsweise Pumpen, angeordnet. Ebenso sind in den Oxidationsmittelsträngen 24 und 46 entsprechende, nicht dargestellte Fördereinrichtungen, in diesem Fall vorzugsweise Gebläse, angeordnet. Diese Fördereinrichtungen können direkt vom Brennstoffzellenstapel 26 oder von der Batterie 34 mit Strom versorgt werden. In dem Nachbrenner 42 erfolgt eine Umsetzung des abgereicherten Anodenabgases mit dem geförderten Brennstoff und Oxidationsmittel zu einem Verbrennungsabgas, welches in einer Mischeinheit 48 mit Kathodenabluft vermischt wird, die über einen Kathodenabluftstrang 50 von dem Brennstoffzellenstapel 26 zu der Mischeinheit 48 gefördert wird. Das Verbrennungsabgas, welches nahezu keine Schadstoffe enthält, durchströmt einen Wärmetauscher 52 zum Vorwärmen der Kathodenzuluft und verlässt schließlich das Brennstoffzellensystem 14 über einen Abgasauslass 54.

Wird dem Brennstoffzellensystem falscher Kraftstoff, das heißt Kraftstoff mit falscher Oktanzahl oder Benzin statt Diesel beziehungsweise Diesel statt Benzin zugeführt, so wird dies von der Sensoreinrichtung 104 erfasst. Ein durch die Sensoreinrichtung 104 erfasstes Signal wird einer nicht dargestellten Steuereinheit eingegeben. Erfüllt der Kraftstoff nicht die gestellten Anforderungen, so wird die Brennstoffzuführung zum System abgeschaltet. Weitergehend kann der Betrieb der gesamten Klimaanlage beendet werden. Ein weiterer Grund für die Abschaltung des Systems, die mit der Kraftstoffversorgung in Beziehung steht, ist eine nicht ausreichende Menge an Kraftstoff im Tank. Zu diesem Zweck wird ein Signal des im Fahrzeug eingebauten Kraftstoffpegelsensors bei der Steuerung der Klimaanlage und insbesondere im Hinblick auf deren Abschaltung genutzt. Ebenso, wie das Kraftstoffpegelsensorsignal im Hinblick auf die Abschaltung genutzt werden kann, kann auch ein eventuell vorhandener ohnehin in das Kraftfahrzeug eingebauter Kraftstoffsensor verwendet werden, der in der Lage ist, die Qualität und/oder die Art des Kraftstoffes zu erfassen. Dessen Ausgangssignal kann ebenfalls im Hinblick auf die Steuerung der Klimaanlage eingesetzt werden. Um bei Wiederinbetriebnahme ein unnötiges Zuführen des falschen oder verschmutzten Kraftstoffes in den Reformer 18 zu vermeiden, setzt an den Kraftstoffversorgungsleitungen 22, 20 eine Brennstoffabzweigleitung 102 an, die mit dem Brennstoffstrang 44 des Nachbrenners 42 verbunden ist. Hierüber kann bei Wiederinbetriebnahme des Systems zunächst sämtlicher Brennstoff aus den Brennstoffsträngen 22, 20 abgesaugt und dem Nachbrenner 42 zugeführt werden. Dies kann beispielsweise über geeignete Ventile erfolgen, die an den Abzweigstellen der Brennstoffabzweigleitung 102 an den Brennstoffsträngen 22, 20 angeordnet sind. Die Förderung des unerwünschten Kraftstoffes in den Brennstoffstrang 44 des Nachbrenners 42 kann durch den Betrieb der Brennstofffördereinrichtungen der Brennstoffstränge 20, 22 des Reformers 18 erfolgen und/oder durch ein Absaugen aufgrund einer Förderung durch den Brennstoffstrang 44, wobei diese Absaugung auf dem Prinzip einer Wasserstrahlpumpe basiert.

In dem Kältekreis 16 sind ein Kompressor 56, ein Kondensator 58, ein Expansionsorgan 60 und ein Verdampfer 62 angeordnet. Der Kompressor 56 ist von dem Elektromotor 32 antreibbar, welcher wiederum vorzugsweise durch den Brennstoffstoffzellenstapel 26 des Brennstoffzellensystems 14 mit Energie versorgt wird, aber kurzzeitig auch von der Batterie 34 mit Energie versorgt werden kann. Dem Verdampfer 62 ist ein Gebläse 64 zugeordnet. Über eine Außenluftleitung 66 kann von Außen Umgebungsluft angesaugt werden.

Der Begriff "von Außen", wie er im Zusammenhang mit dieser Erfindung verwendet wird, bedeutet dabei von außerhalb des Innenraumes 78, bezeichnet somit die das Kraftfahrzeug 10 umgebende Luft. Die Außenluftleitung 66 führt zu einer Stelleinrichtung 68, welche die Außenluft dem Gebläse 64 zuführen kann. Die von der Stelleinrichtung 68 zum Gebläse 64 geleitete Luft strömt als Luftstrom 70 an dem Verdampfer 62 vorüber. Auf diese weise kann dem Luftstrom 70 durch den Verdampfer 62 Wärmeenergie entzogen werden. Der gekühlte Luftstrom kann dann über eine Stelleinrichtung 72 und eine Luftführung 74 über eine Hutablage 76 einem Fahrzeuginnenraum 78 zugeführt werden. Die Stelleinrichtung 72 kann beispielsweise durch ein Elektromagnetventil oder durch Rückschlagventile, welche jeweils nur eine Strömung von den beiden Zuleitungen hin zur Luftführung 74 zulassen, realisiert werden. Die gekühlte Luft strömt durch den Fahrzeuginnenraum 78 (wie durch Pfeile in Fig. 2 veranschaulicht) und verlässt diesen unterhalb einer Sitzbank 80, vorzugsweise der hinteren Sitzbank. Anschließend strömt die Luft über eine Luftführung 82 zurück zu der Stelleinrichtung 68, wo sie ganz oder teilweise nach Außen abgeführt wird oder zurück zum Gebläse 64 geleitet wird. Für die Führung der Luft nach Außen ist eine entsprechende Leitung vorgesehen, die aus Gründen der Übersichtlichkeit nicht dargestellt ist. Über die Schaltung der Stelleinrichtung 68 lässt sich somit wahlweise ein Frischluft- oder ein Umluftkonzept realisieren, bei dem Luft von Außen über die Außenluftleitung 66 angesaugt wird oder die Luft aus der Luftführung 82 rezirkuliert wird. Auch Mischformen dieser Betriebsarten sind möglich. Ferner kann mittels der Stelleinrichtung 68, die über die Außenluftleitung 66 eingeleitete Luft einer Luftführung 84 und über diese einem Gebläse 86 zugeführt werden. In diesem Falle strömt diese Luft als Luftstrom 88 an heißen Teilen des Brennstoffzellensystems 14 direkt vorüber oder durch (nicht dargestellte) Wärmetauscher, die zwischen dem Luftstrom 88 und den heißen Teilen vermitteln. Die heißen Teile des Brennstoffzellensystems 14 sind vorzugsweise der Reformer 18, der Brennstoffzellenstapel 26 und der Nachbrenner 42. Auf diese Weise kann durch die Abwärme der heißen Teile des Brennstoffzellensystems 14 dem Luftstrom 88 Wärmeenergie zugeführt werden. Der erwärmte Luftstrom 88 führt über eine Luftführung 90 zu der elektrischen Heizeinrichtung 36, die direkt von einer vom Brennstoffzellenstapel 26 erzeugten oder von der Batterie 34 gespeicherten Energie versorgt wird. Somit kann in einem Heizbetrieb die ohnehin schon vorgewärmte Luft in der Luftführung 90 weiter erwärmt werden und über die Stelleinrichtung 72 und die Luftführung 74 dem Innenraum 78 zugeführt werden. Nach dem Durchströmen des Innenraums 78 führt der Luftstrom über die Luftführung 82 zur Stelleinrichtung 68, wo er entweder nach Außen abgeführt wird oder zurück zum Gebläse 86 geleitet wird. Auch hierbei lässt sich über die Schaltung der Stelleinrichtung 68 somit wahlweise in einem solchen Heizbetrieb ein Umluftkonzept realisieren, bei dem Luft von Außen über die Außenluftleitung 66 angesaugt wird oder die Luft aus der Luftführung 82 rezirkuliert wird.

Nachfolgend werden verschiedene Betriebszustände aufgezeigt, die mittels der vorstehend beschriebenen Klimaanlage realisierbar sind:

Kühlbetrieb mit Umluftzirkulation: In diesem Betriebszustand ist die Stelleinrichtung 68 so geschaltet, dass Luft aus dem Innenraum 78 über die Luftführung 82 zu dem Gebläse 64 geführt wird. Dieser Luftstrom 70 wird gekühlt und über die Stelleinrichtung 72 und die Luftführung 74 in den Innenraum 78 geführt, wodurch dieser gekühlt wird. Um im Kühlbetrieb ein Aufheizen des Kofferraums, in dem die Klimaanlage 12 angeordnet ist, zu vermeiden, sind entsprechende (nicht dargestellte) Gebläse und Leitungen vorgesehen, welche die Abwärme der Klimaanlage 12 (insbesondere des Brennstoffzellensystems 14, des Kondensators 58, des Kompressors 56 und des Elektromotors 32) nach Außen abführen. Im Falle des Kondensators 58 könnte dieser alternativ auch Außen am Fahrzeug 10 angeordnet werden, um somit die Abwärme direkt abzutransportieren.

Kühlbetrieb mit Außenluftzuführung: In diesem Betriebszustand ist die Stelleinrichtung 68 so geschaltet, dass Außenluft über die Außenluftleitung 66 zu dem Gebläse 64 geführt wird. Der Luftstrom 70 wird gekühlt und über die Stelleinrichtung 72 und die Luftführung 74 in den Innenraum 78 geführt. Der über die Luftführung 82 aus dem Innenraum 78 führende Luftstrom wird von der Stelleinrichtung 68 nach Außen abgegeben. Hinsichtlich des Abführens der Abwärme der Klimaanlage 12 werden die im Rahmen des vorstehend beschriebenen Kühlbetriebs erläuterten Maßnahmen ergriffen.

Heizbetrieb mit Umluftzirkulation: In diesem Betriebszustand wird über die Luftführung 82, die Stelleinrichtung 68 und die Luftführung 84 ein Luftstrom 88 aus dem Innenraum 78 zum Gebläse 86 geführt. Der Kältekreis 16 ist nicht in Betrieb, d.h. der Elektromotor 32 wird nicht betrieben. Das Gebläse 86 führt den Luftstrom 88 an den heißen Teilen des Brennstoffzellensystems 14 vorüber. Die auf diese weise vorgewärmte Luft wird mittels der Luftführung 90 zu der elektrischen Heizeinrichtung 36 und weiter zur Stelleinrichtung 72 geführt. Die elektrische Heizeinrichtung 36 wird zur Erwärmung der Luft in der Luftführung 90 mit elektrischem Strom betrieben. Anschließend strömt die erwärmte Luft über die Stelleinrichtung 72 und die Luftführung 74 in den Innenraum 78.

Heizbetrieb mit Außenluftzuführung: In diesem Betriebszustand wird Außenluft über die Außenluftleitung 66 von der Stelleinrichtung 68 der Luftführung 84 zugeführt. Die durch den Betrieb des Brennstoffzellensystems 14 entstehende Abwärme erwärmt den Luftstrom 88. Dieser erwärmte Luftstrom wird, wie im vorstehend beschriebenen Betriebszustand, über die Luftführung 90, die elektrische Heizeinrichtung 36, die Stelleinrichtung 72 und die Luftführung 74 in den Innenraum 78 geleitet. Anschließend wird dieser Luftstrom über die Luftführung 82 zur Stelleinrichtung 68 geführt, wo er nach Außen abgegeben wird.

Diese unterschiedlichen Betriebszustände werden über eine elektronische Steuereinheit angesteuert, die je nach Temperatur im Innenraum 78, Außentemperatur, eingestellten Solltemperaturen und gewünschtem Klimatisierungsbetrieb den geeigneten Betriebszustand auswählt. Diese elektronische Steuereinheit ist aus Gründen der Übersichtlichkeit in den Figuren nicht dargestellt, jedoch ist dem Fachmann sofort ersichtlich, dass diese zumindest mit den entsprechenden Fördereinrichtungen in den Strängen 20, 22, 24, 44 und 46 der Energieverteilung in der elektrischen Leitung 30, den Gebläsen 64 und 86, der elektrischen Heizeinrichtung, dem Elektromotor 32, den Stelleinrichtungen 68 und 72 sowie den entsprechenden Temperatursensoren verbunden ist.

Die vorstehend beschriebene Strömungsrichtung im Fahrzeuginnenraum 78, d.h. Einführen der Luft über die Hutablage 76 und Abführen der Luft unterhalb der Sitzbank 80 kann im Kühl- und/oder Heizbetrieb auch umgekehrt sein. Für eine derartige Abwandlung müsste entsprechend die Luftführung 74 unterhalb der Sitzbank 80 in den Fahrzeuginnenraum 78 münden und die Luftführung 82 über die Hutablage 76 in den Fahrzeuginnenraum 78 münden.

Figur 2 zeigt eine schematische Darstellung des Kraftfahrzeugs 10 mit der erfindungsgemäßen Klimaanlage 12. In Figur 2 ist insbesondere die Einbaulage der Klimaanlage 12 veranschaulicht. Die erfindungsgemäße Klimaanlage 12 ist im Kofferraum montierbar, vorzugsweise als nachrüstbare Einheit.

Zusätzlich zur beschriebenen Klimaanlage 12 hat das Kraftfahrzeug 10 eine konventionelle Klimaanlage 92, bei der ein Kompressor eines herkömmlichen Kältekreises mechanisch von einem Antriebsaggregat 94, vorzugsweise einem Verbrennungsmotor, antreibbar ist. Dem Antriebsaggregat ist in bekannter Weise ein Auspuff 96 zugeordnet. Während der Fahrt des Kraftfahrzeugs 10 und dem damit verbundenen Betrieb des Antriebsaggregats 94 kann der Innenraum 78 über die konventionelle, fahrzeugeigene Klimaanlage 92 in allgemein bekannter Weise gekühlt bzw. mittels Abwärme des Antriebsaggregats 94 erwärmt werden. Bei Stillstand des Antriebsaggregats 94 kann der Innenraum 78 über die erfindungsgemäße Klimaanlage 12 klimatisiert werden. Zur Erfassung der Abgastemperatur ist ein elektrisch mit der elektronischen Steuereinheit der Klimaanlage 12 verbundener Abgastemperatursensor 98 vorgesehen, der außen am Auspuff 96 montiert ist, oder in den Auspuff 96 eingebaut ist. Alternativ, oder zusätzlich zum Abgastemperatursensor 98 ist ein Sensor 100 vorgesehen, der mit der elektronischen Steuereinheit der Klimaanlage 12 elektrisch verbunden ist. Der Sensor 100 kann ein Bewegungssensor und/oder ein Schallsensor sein. Im Falle eines Bewegungssensors kann dieser durch Erfassung einer Beschleunigung bestimmen, dass das Kraftfahrzeug fortbewegt wird, sobald ein bestimmter Beschleunigungsschwellenwert überschritten wird. Aus der Fortbewegung des Kraftfahrzeugs kann geschlussfolgert werden, dass das Antriebsaggregat in Betrieb ist und somit die Möglichkeit besteht, die konventionelle Klimaanlage in Betrieb zu nehmen. Im Falle des Schallsensors spricht dieser auf einen bestimmten Frequenzbereich an, in dem die Betriebsgeräusche des Antriebsaggregats liegen. Der Sensor 100 ist vorzugsweise, wie in Fig. 2 dargestellt, am Gehäuse der Klimaanlage 12 montiert. Alternativ kann der Sensor 100 auch am Fahrzeugunterboden oder einer sonstigen Stelle des Kraftfahrzeugs 10 montiert sein, was jedoch ein Verlegen von elektrischen Leitungen erforderlich macht.

Alternativ zu den Sensoren 98 und 100 kann auch ein von einem fahrzeugeigenen Bordcomputer bereitgestelltes Signal verwendet werden, welches anzeigt, ob das Antriebsaggregat in Betrieb ist.

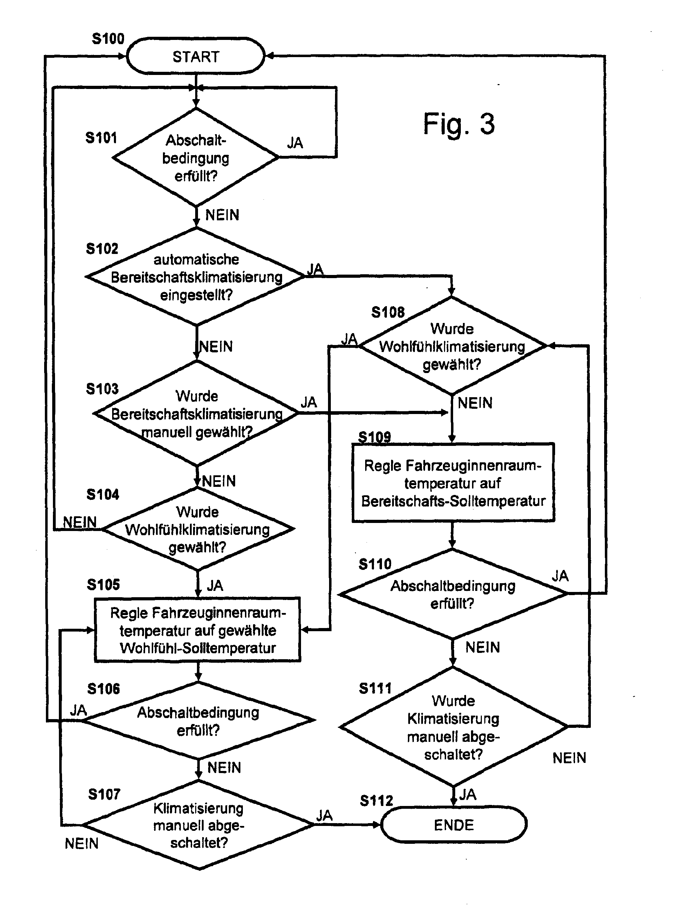

Figur 3 zeigt ein Flussdiagramm des Klimatisierungsbetriebs der erfindungsgemäßen Klimaanlage 12. Die Routine aus Figur 3, welche von der elektronischen Steuereinheit ausgeführt wird, startet bei Schritt S100, wenn die Klimaanlage 12 manuell eingeschaltet wird. Bei Schritt S101 wird bestimmt, ob eine Abschaltbedingung erfüllt ist. Die Abschaltbedingung kann im Rahmen dieser Routine der Betrieb des Antriebsaggregats oder ein Fortbewegen des Kraftfahrzeugs 10 sein. Die Abschaltbedingung ist also erfüllt, wenn das Antriebsaggregat in Betrieb ist, z.B. ein Verbrennungsmotor läuft, oder das Kraftfahrzeug 10 fortbewegt wird. Ob diese Bedingung erfüllt ist kann mittels des Abgastemperatursensors 98 und/oder des Sensors 100 bestimmt werden. Alternativ kann das vom Bordcomputer gelieferte Signal ausgewertet werden, welches anzeigt, ob das Antriebsaggregat 94 in Betrieb ist. Wenn demnach der Sensor 100 zur Bestimmung herangezogen wird und dieser ein Schallsensor ist, wird bei Schritt S101 von der elektronischen Steuereinheit abgefragt, ob der Schallsensor ein Signal liefert, welches das Vorliegen einer Schallfrequenz anzeigt, die das Antriebsaggregat in einem betriebenen Zustand abgibt. Der Prozess fährt erst dann zu Schritt S102 fort, wenn die Abfrage in Schritt S101 negativ ist. In Schritt S102 wird bestimmt, ob der Benutzter über einen Auswahlschalter oder eine entsprechende Programmierung der Klimaanlage 12 einen automatischen Bereitschaftsbetrieb ausgewählt hat. Falls dies nicht der Fall ist, fährt der Prozess zu Schritt S103 fort, wo bestimmt wird, ob der Benutzer manuell eine Bereitschaftsklimatisierung ausgewählt hat. Ist dies nicht der Fall, dann fährt der Prozess zu Schritt S104 fort, wo bestimmt wird, ob der Benutzer manuell eine Wohlfühlklimatisierung ausgewählt hat. Falls dies mit "JA" zu beantworten ist, fährt der Prozess zu Schritt S105 fort, bei dem eine Wohlfühlklimatisierung durchgeführt wird. Bei dieser Wohlfühlklimatisierung wird der Innenraum 78 des Kraftfahrzeugs 10 auf eine Wohlfühltemperatur (z.B. 18°C) klimatisiert, indem eine Auswahl aus den verschiedenen Heiz- und Kühlmodi von der elektronischen Steuereinheit getroffen wird. Mit dem nachfolgenden Schritt S106 wird festgelegt, dass diese Wohlfühlklimatisierung automatisch gestoppt wird, wenn die bereits erläuterte Abschaltbedingung erfüllt ist. Wenn in Schritt S106 demnach bestimmt wird, dass die Abschaltbedingung nicht erfüllt ist, wird in S107 bestimmt, ob die Klimaanlage 12 manuell abgestellt wurde. Bei einer manuellen Abschaltung endet der Prozess bei Schritt S112, ansonsten kehrt der Prozess zurück zu Schritt S105. Falls der Benutzer in Schritt S104 keine Wohlfühlklimatisierung gewählt hat, kehrt der Prozess zu Schritt S101 zurück. Falls in Schritt S102 bestimmt wurde, dass eine automatische Bereitschaftsklimatisierung gewählt wurde, dann fährt der Prozess von dort zu Schritt S108 fort, wo bestimmt wird, ob von dem Benutzer manuell eine Wohlfühlklimatisierung gewählt wurde. Ist dies der Fall, dann fährt der Prozess zu Schritt S105 fort, wo die bereits beschriebene Wohlfühlklimatisierung durchgeführt wird. Falls in Schritt S108 bestimmt wird, dass der Benutzer keine Wohlfühlklimatisierung ausgewählt hat, dann fährt der Prozess zu Schritt S109 fort, wo die erfindungsgemäße Bereitschaftsklimatisierung durchgeführt wird. Bei dieser Bereitschaftsklimatisierung wird die Temperatur im Innenraum 78 auf eine Bereitschafts-Solltemperatur (z.B. 25°C) geregelt, die sich von der Wohlfühltemperatur unterscheidet. Dies wird realisiert, indem die elektronische Steuereinheit in geeigneter Weise aus den beschriebenen Heiz- und Kühlbetriebsarten auswählt. Ist die Außentemperatur hoch, dann ist die Bereitschafts-Solltemperatur größer als die Wohlfühltemperatur. Ist hingegen die Außentemperatur niedrig, dann ist die Bereitschafts-Solltemperatur geringer als die Wohlfühltemperatur. Somit wird beispielsweise bei hoher Außentemperatur ein Aufheizen des Innenraumes 78 verhindert und im Bedarfsfall ein sehr schnelles Erreichen der Wohlfühltemperatur gewährleistet, weil der Innenraum 78 bereits "vorgekühlt" ist. Nach Schritt S109 fährt der Prozess zu Schritt S110 fort, wo überprüft wird, ob die Abschaltbedingung erfüllt ist. Ist dies der Fall, dann kehrt der Prozess zu Schritt S100 zurück. Ansonsten fährt der Prozess zu Schritt S111 fort, wo bestimmt wird, ob der Benutzer die Klimatisierung manuell abgestellt hat - wenn "JA", dann endet der Prozess bei Schritt S112 und wenn "NEIN", dann kehrt der Prozess zu Schritt S108 zurück.

Der bevorzugte Betrieb der Klimaanlage 12 sieht in der Praxis so aus, dass eine automatische Bereitschaftsklimatisierung gewählt ist. Wird das Antriebsaggregat 94 betrieben, dann kann der Innenraum 78 über die auf das Fahrzeug optimierte, sehr effektive und speziell ausgelegte Klimaanlage 92 klimatisiert werden. Sobald das Antriebsaggregat 94 abgestellt wird (und die Insassen das Kraftfahrzeug 10 eventuell verlassen), startet die Klimaanlage 12 die Bereitschaftsklimatisierung, die den Innenraum bei hoher Außentemperatur auf beispielsweise 25°C kühlt. Dieser Bereitschaftsklimatisierungsbetrieb kann mit 60 Litern Brennstoff problemlos 12 Tage im Dauerbetrieb erfolgen. Der Bereitschaftsklimatisierungsbetrieb wird solange durchgeführt, bis der Benutzer kurz vor Fahrtantritt eine Wohlfühlklimatisierung wählt, die dann den Innenraum 78 auf beispielsweise 18°C kühlt. Die Wohlfühlklimatisierung wird dann solange durchgeführt bis das Antriebsaggregat 94 wieder gestartet wird.

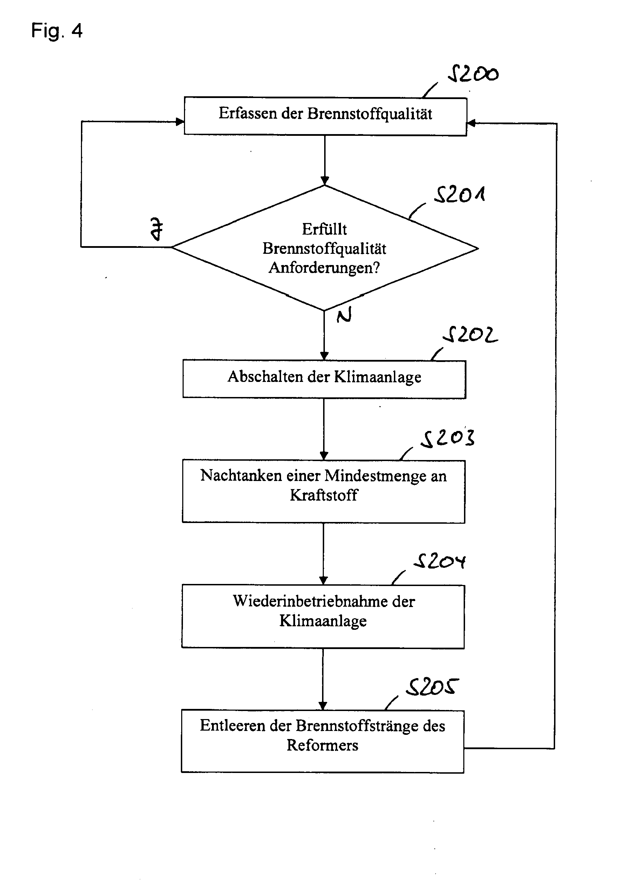

Figur 4 zeigt ein Flussdiagramm zur Erläuterung eines erfindungsgemäßen Verfahrens. Das erfindungsgemäße Verfahren wird am Beispiel der Überwachung der Brennstoffqualität erläutert. Während des im Zusammenhang mit Figur 3 beschriebenen Betriebs der Klimaanlage wird in Schritt S200 gemäß Figur 4 die Brennstoffqualität mittels eines Sensors erfasst. Dieser Sensor kann Bestandteil des Brennstoffzellensystems, Bestandteil der Klimaanlage oder Bestandteil oder eines sonstigen Teilsystems des Kraftfahrzeugs sein. In Schritt S201 wird ermittelt, ob die Brennstoffqualität vorgegebene Anforderungen erfüllt. Ist dies der Fall, so wird gemäß Schritt S200 weiterhin kontinuierlich die Brennstoffqualität erfasst. Werden die vorgegebenen Anforderungen nicht erfüllt, so wird gemäß Schritt S202 die Klimaanlage oder zumindest die Brennstoffzuführung zum Reformer automatisch abgeschaltet. Damit das System wieder in Betrieb genommen werden kann, ist es gemäß Schritt S203 erforderlich, dass eine Mindestmenge an Kraftstoff nachgetankt wird. Dies kann durch automatische Überwachung der Ausgangssignale des Kraftstoffpegelsensors festgestellt werden. Nach dem Nachtanken kann in Schritt S204 der Versuch einer Wiederinbetriebnahme der Klimaanlage unternommen werden. Zu diesem Zweck wird zunächst in Schritt S205 dafür gesorgt, dass die Brennstoffstränge die den Brennstoff mit verminderter Qualität enthalten, geleert werden. Danach wird zu Schritt S200 übergegangen, so dass das bereits beschriebene Verfahren mit dem Erfassen der Brennstoffqualität erneut eingeleitet wird.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 10: Kraftfahrzeug
- 12: Klimaanlage
- 14: Brennstoffzellensystem
- 16: Kältekreis
- 18: Reformer
- 20: Brennstoffstrang
- 22: Brennstoffstrang
- 24: Oxidationsmittelstrang
- 26: Brennstoffzellenstapel
- 28: Kathodenzuluftstrang
- 30: Elektrische Leitung
- 32: Elektromotor
- 34: Batterie
- 36: Elektrische Heizeinrichtung
- 38: Anodenabgasstrang
- 40: Mischeinheit
- 42: Nachbrenner
- 44: Brennstoffstrang
- 46: Oxidationsmittelstrang
- 48: Mischeinheit
- 50: Kathodenabluftstrang
- 52: Wärmetauscher
- 54: Abgasauslass
- 56: Kompressor
- 58: Kondensator
- 60: Expansionsorgan
- 62: Verdampfer
- 64: Gebläse
- 66: Außenluftleitung
- 68: Stelleinrichtung
- 70: Luftstrom
- 72: Stelleinrichtung
- 74: Luftführung
- 76: Hutablage
- 78: Fahrzeuginnenraum
- 80: Sitzbank
- 82: Luftführung
- 84: Luftführung
- 86: Gebläse
- 88: Luftstrom
- 90: Luftführung
- 92: Konventionelle Klimaanlage
- 94: Antriebsaggregat
- 96: Auspuff
- 98: Abgastemperatursensor
- 100: Sensor
- 102: Brennstoffabzweigleitung
- 104: Sensor

## Patentansprüche

1. Verfahren zum Steuern eines Brennstoffzellensystems (14), welches einer Klimaanlage (12) zur Standklimatisierung eines von einem Antriebsaggregat (94) antreibbaren Kraftfahrzeugs (10) zum Betreiben eines Kältekreises (16) zugeordnet ist, **dadurch gekennzeichnet, dass** eine Brennstoffzuführung des Brennstoffzellensystems (14) mittels eines Steuersignals automatisch abgeschaltet wird, welches anzeigt, dass die Menge und/oder die Beschaffenheit des zur Verfügung stehenden Brennstoffs vorgegebene Anforderungen nicht erfüllt.

2. Verfahren nach Anspruch 1, **dadurch gekennzeichnet, dass** die vorgegebenen Anforderungen an die Beschaffenheit Anforderungen an die Qualität des als Brennstoff eingesetzten Kraftstoffs umfassen.

3. Verfahren nach Anspruch 1 oder 2, **dadurch gekennzeichnet, dass** die vorgegebenen Anforderungen an die Beschaffenheit Anforderungen an die Art des als Brennstoff eingesetzten Kraftstoffs umfassen.

4. Verfahren nach einem der vorangehenden Ansprüche, **dadurch gekennzeichnet, dass** die vorgegebenen Anforderungen an die Beschaffenheit Anforderungen an die Schwefelkonzentration in dem als Brennstoff eingesetzten Kraftstoff umfassen.

5. Verfahren nach einem der vorangehenden Ansprüche, **dadurch gekennzeichnet, dass** bei Wiederinbetriebnahme der Brennstoffzuführung nach einer automatischen Abschaltung in einer Brennstoffleitung (20, 22, 44) vorhandener Restbrennstoff direkt einem Nachbrenner (42) des Brennstoffzellensystems (14) zugeführt wird.

6. Verfahren nach einem der vorangehenden Ansprüche, **dadurch gekennzeichnet, dass** die Brennstoffzuführung wieder in Betrieb genommen wird, wenn der Kraftstoffpegel um einen vorbestimmten Betrag angestiegen ist.

7. Verfahren nach Anspruch 6, **dadurch gekennzeichnet, dass** die Brennstoffzuführung wieder in Betrieb genommen wird, wenn der Kraftstoffpegel um einen vorbestimmten relativen Betrag angestiegen ist.

8. Verfahren nach einem der vorangehenden Ansprüche, **dadurch gekennzeichnet, dass** die Beschaffenheit des zur Verfügung stehenden Brennstoffs durch eine Sensoreinrichtung (104) erfasst wird, die der Klimaanlage und/oder dem Brennstoffzellensystem zugeordnet ist.

9. Verfahren nach einem der vorangehenden Ansprüche, **dadurch gekennzeichnet, dass** die Beschaffenheit des zur Verfügung stehenden Brennstoffs durch eine Sensoreinrichtung erfasst wird, mit der das Kraftfahrzeug unabhängig von der Anwesenheit einer Klimaanlage bestückt ist.

10. Klimaanlage (12) zur Standklimatisierung eines von einem Antriebsaggregat (94) antreibbaren Kraftfahrzeugs (10), mit einem Brennstoffzellensystem (14) zum Betreiben eines Kältekreises (16), **dadurch gekennzeichnet, dass** eine Brennstoffzuführung des Brennstoffzellensystems (14) mittels eines Steuersignals automatisch abschaltbar ist, welches anzeigt, dass die Menge und/oder die Beschaffenheit des zur Verfügung stehenden Brennstoffs vorgegebene Anforderungen nicht erfüllt.

11. Klimaanlage (12) nach Anspruch 10, **dadurch gekennzeichnet, dass** die vorgegebenen Anforderungen an die Beschaffenheit Anforderungen an die Qualität des als Brennstoff eingesetzten Kraftstoffs umfassen.

12. Klimaanlage (12) nach Anspruch 10 oder 11, **dadurch gekennzeichnet, dass** die vorgegebenen Anforderungen an die Beschaffenheit Anforderungen an die Art des als Brennstoff eingesetzten Kraftstoffs umfassen.

13. Klimaanlage (12) nach einem der Ansprüche 10 bis 12, **dadurch gekennzeichnet, dass** die vorgegebenen Anforderungen an die Beschaffenheit Anforderungen an die Schwefelkonzentration in dem als Brennstoff eingesetzten Kraftstoff umfassen.

14. Klimaanlage (12) nach einem der Ansprüche 10 bis 13, **dadurch gekennzeichnet, dass** bei Wiederinbetriebnahme der Brennstoffzuführung nach einer automatischen Abschaltung in einer Brennstoffleitung (20, 22, 44) vorhandener Restbrennstoff direkt einem Nachbrenner (42) des Brennstoffzellensystems (14) zuführbar ist.

15. Klimaanlage (12) nach einem der Ansprüche 10 bis 14, **dadurch gekennzeichnet, dass** die Brennstoffzuführung wieder in Betrieb nehmbar ist, wenn der Kraftstoffpegel um einen vorbestimmten Betrag angestiegen ist.

16. Klimaanlage (12) nach Anspruch 15, **dadurch gekennzeichnet, dass** die Brennstoffzuführung wieder in Betrieb nehmbar ist, wenn der Kraftstoffpegel um einen vorbestimmten relativen Betrag angestiegen ist.

17. Klimaanlage (12) nach einem der Ansprüche 10 bis 16, **dadurch gekennzeichnet, dass** die Beschaffenheit des zur Verfügung stehenden Brennstoffs durch eine Sensoreinrichtung (104) erfassbar ist, die der Klimaanlage und/oder dem Brennstoffzellensystem zugeordnet ist.

18. Klimaanlage (12) nach einem der Ansprüche 10 bis 17, **dadurch gekennzeichnet, dass** die Beschaffenheit des zur Verfügung stehenden Brennstoffs durch eine Sensoreinrichtung erfassbar ist, mit der das Kraftfahrzeug unabhängig von der Anwesenheit einer Klimaanlage bestückt ist.
